# EUROPEAN PATENT APPLICATION

(11) **EP 0 590 792 A2**
(43) Date of publication of application: **06.04.1994**
(21) Application number: 93306806.6
(22) Date of filing: 26.08.1993
(51) Int. Cl.: B01D 29/64

(54) **Filtration apparatus**

(30) Priority: 28.08.1992 GB 9218372
(71) Applicant: Walker, Brian Knowles, Longridge, Preston, Lancashire (GB)
(72) Inventor: Walker, Brian Knowles, Longridge, Preston, Lancashire (GB)
(74) Representative: Goodwin, Mark

(57) **Abstract**

A filtration apparatus comprises a tank (1) in which one or more liquid-permeable filtration screens (3a,3b) are located. A pressing device is movable over each screen (3a,3b) to force liquid through that screen (3a,3b). The filtration screens (3a,3b) comprise a plurality of rows of wedge shaped metal.

## Description

The present invention relates to filtration apparatus of the kind comprising a tank, at least one filtration screen and at least one pressing device for each screen movable over the surface of the screen to force liquid therethrough.

GB 2013514B describes filtration apparatus of the type described above. The screen comprises two stainless steel liquid-permeable perforated sheet filtration screens. These screens are not sufficiently strong to withstand the forces exerted by the pressing devices. Thus a secondary backing screen is required in order to provide the required support. This backing screen covers a large percentage of the filtration screen surface (about 50%). Filtration over this part of the screen is prevented by the backing screen, thus considerably reducing the filtration area of the device.

The present invention has been made from a consideration of this problem.

According to the present invention there is provided filtration apparatus comprising a tank, at least one liquid-permeable screen in the tank and a pressing device having a pressing member or members movable over the surface of the or each screen to force liquid therethrough, characterised in that the screen comprises a plurality of rows of wedge shaped material.

In a preferred embodiment of the invention the wedge shaped material comprises metal and more preferably stainless steel.

By using a screen of the type defined above no supports are required or the amount of support required is greatly reduced and the supports are spaced from the screen by the screens integral longitudinal braces thus not affecting the screen surface.

The invention will now be described further by way of example only with reference to the accompanying drawings in which:-
Fig. 1 is a diagrammatic side view of one filtration apparatus according to the invention;
Fig. 2 is a diagrammatic side view of the first stage screen of the apparatus of Fig. 1;
Fig. 3 is a diagrammatic side view of the second stage screen of the apparatus of Fig. 2;
Fig. 4 is a magnified view of the end piece "A" of the screens;
Fig. 5 is a magnified view of the end piece "B" of the screens; and
Fig. 6 is a section through the screens of the apparatus of Fig. 1.

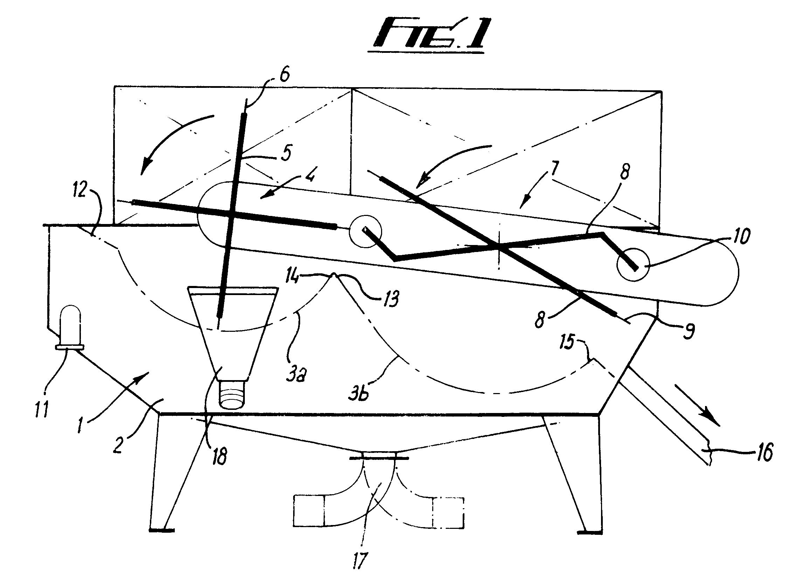

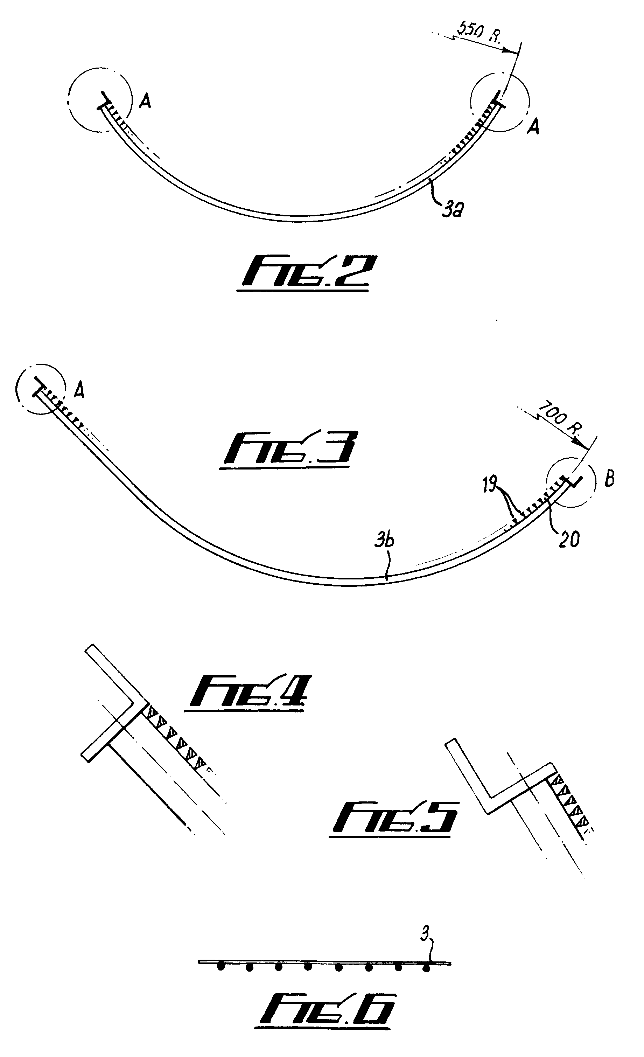

The filtration apparatus shown in Fig. 1 may be used for filtering manure in the form of a slurry of liquid and fibrous material. The apparatus may typically be used for processing cattle manure or pig manure.

The apparatus comprises a rigid open-topped steel tank. Within the tank 1, between opposite vertical side walls 2 thereof, there are mounted two stainless steel liquid-permeable filtration screens 3a,3b. Each screen extends between and up to the two side walls 2 and each screen is curved part-cylindrically so as to define an open-topped receptacle. The first screen 3a is of smaller radius than the second screen 3b. The screen structure will be described hereinafter.

Above the screen 3a there is mounted a rotable pressing device 4 having four radially projecting arms 5 each having a sweeping member 6 in the form of a stiff brush of polypropylene bristles fixed at the end of the arm. The length of the arms 5 is such that the brushes contact the surface of the screen 3a on rotation of the device 4. Each brush 6 extends across the whole width of the screen 3a.

Above the screen 3b there is mounted a second rotatable pressing device 7 having four radially projecting arms 8 each having a pressing member 9 or 10 at the same end. Two of the arms 8 which are diametrically opposite each other having pressing members 9 in the form of brushes of the same kind as the brushes 6. The other two arms 8 having pressing members 10 in the form of heavy rubber-coated steel rollers which are spring urged radially outwards and extend across the width of the screen 3b. The lengths of the arms 8 is such that the brushes 9 and rollers 10 can contact the surface of the screen 3b on rotation of the device 7.

The two pressing devices 4,7 are connected to be driven together by an electric motor (not shown).

At one end of the tank 1 adjacent the screen 3a, there is an inlet 11 leading to an overflow trough (not shown) which communicates with one transverse edge 12 of the screen 3a. The other transverse edge 13 of the screen 3a is lower than the edge 12 and is connected to one transverse edge 14 of the screen 3b. The other transverse edge 15 of the screen 3b is lower than the edge 14 and communicates with an outlet chute (not shown in detail).

The tank 1 has an outlet 17 thereto beneath the screens 3a, 3b. There is also a side overflow outlet 18 is above the smaller screen 3a.

In use, slurry is fed to the inlet 11 and passes from the trough onto the small screen 3a. Any surplus liquid is expelled through overflow 18 for recycling. Some liquid is expelled from the slurry through the screen 3a into the tank 1 as the brushes 6 rotate over the slurry on the screen 3a and the remaining slurry is swept by the brushes 6 onto the screen 3b. Here, further liquid is expelled into the tank 1, the remaining semi-dry material having been swept by the brushes 9 to the outlet chute 16.

A protective hood (not shown) is fixed over the top of the tank in use.

With regard to the screens these comprise a plurality of transversely oriented aligned metal wires 19 which have a wedge shaped section. The apertures 20 between the wedge wires 19 become progressively wider towards the base of the wires 19 so as to prevent the apertures becoming clogged with the filtered material. The screens 3a, 3b are made from pressed wires threaded onto longitudinal directed cross rods 20 and are secured by welding. These cross rods 20 provide limited support without covering more than a small percentage of the filtration area. Wedge wire has been available for many years solely for use in filtration under gravity. Such material has never been considered strong enough to be used in filtration using a pressing device.

The screens of the invention are seen to have different radii of curvature. A preferred radius of curvature of the first screen is about 550 rad whereas a preferred radius of curvature of the second screen is about 7700 rad.

The use of wedge wire has considerable advantages in that:-
The screens are sufficiently strong to dispense with a support screen resulting in a greater filtration area and better liquid flow capacity; and
the same filtration area can be achieved with smaller apertures resulting in better filtration of fine particles.

It is to be understood that this embodiment of the invention has been illustrated by way of example only. Many modifications and variations are possible.

## Claims

1. Filtration apparatus comprising a tank (1), at least one liquid-permeable screen (3a,3b) in the tank (1) and a pressing device (4) having a pressing member or members movable over the surface of the or each screen (3a,3b) to force liquid therethrough, characterised in that each screen (3a,3b) comprises a plurality of rows of wedge shaped material.

2. Filtration apparatus as claimed in claim 1, characterised in that the screen comprises metal.

3. Filtration apparatus as claimed in claim 1 or claim 2, characterised in that the screen (3a,3b) comprises stainless steel.

4. Filtration apparatus as claimed in any preceding claim, characterised in that the screen (3a,3b) comprises integral longitudinal braces.

5. Filtration apparatus as claimed in any preceding claim, characterised in that no supports are provided for the screen (3a,3b) other than any integral braces of the screen (3a,3b).

6. Filtration apparatus as claimed in any of claims 1 to 4, characterised in that a support is provided for the screen (3a,3b), the support being spaced apart from the screen (3a,3b) by the longitudinal braces of the screen (3a,3b).

7. The use of the filtration apparatus of any of claims 1 to 6 in the filtration of manure.
